## Europäisches Patentamt
## European Patent Office
## Office européen des brevets

(19)

(11) Veröffentlichungsnummer : **0 010 537**
**B1**

(12)

# EUROPÄISCHE PATENTSCHRIFT

(45) Veröffentlichungstag der Patentschrift :
24.02.82

(51) Int. Cl.³ : **B 29 J    5/00**

(21) Anmeldenummer : 79890041.1

(22) Anmeldetag : 09.10.79

(54) Verfahren zur Herstellung von Holzspanplatten.

(30) Priorität : 13.10.78 AT 7389/78

(43) Veröffentlichungstag der Anmeldung :
30.04.80 (Patentblatt 80/09)

(45) Bekanntmachung des Hinweises auf die Patenterteilung : 24.02.82 Patentblatt 82/08

(84) Benannte Vertragsstaaten :
CH DE FR GB IT NL SE

(56) Entgegenhaltungen :
DE - A1 - 2 447 590
DE - A1 - 2 536 539
DE - A1 - 2 553 459
DE - B2 - 2 122 817
DE - C - 1 084 017

(73) Patentinhaber : österreichische Hiag-Werke Aktiengesellschaft
Seybelgasse 20
A-1235 Wien (AT)

(72) Erfinder : Mayerhoffer, Herbert
Gluckgasse 2
A-1015 Wien (AT)

(74) Vertreter : Pawloy, Heinrich, Dr. et al
Patentanwälte Dr. Heinrich Pawloy Dipl.-Ing. Helmut Sonn Dipl.-Ing. Arnulf Weinzinger Riemergasse 14
A-1010 Wien (AT)

EP 0 010 537 B1

Imprimerie Jouve, 18, rue St-Denis, 75001 Paris, France

### Verfahren zur Herstellung von Holzspanplatten

Die Erfindung bezieht sich auf ein Verfahren zur Herstellung von Holzspanplatten, bei dem das Rohmaterial einer Zerspanung und einer darauffolgenden Trocknung auf eine Feuchte von weniger als 4 %, vorzugsweise weniger als 2 %, unterworfen wird, hierauf mit einer wässerigen Flotte eines Aminoplasts beleimt und danach das so erhaltene beleimte Spanmaterial unter Druck und Hitze zu Platten verpreßt wird.

Die mechanischen Eigenschaften von Holzspanplatten werden zu einem wesentlichen Teil durch den für die Bindung des Spanmaterials eingesetzten aminoplastischen Leim bestimmt. Hiebei geht im allgemeinen mit einer Erhöhung der zur Bindung des Spanmaterials eingesetzten Leimmenge eine Erhöhung der Festigkeit einher. Das Beleimungsmaterial stellt nun aber einen wesentlichen Kostenfaktor bei der Herstellung von Holzspanplatten dar, sodaß schon aus diesem Grund das Bestreben dahin geht, eine möglichst geringe Leimmenge anzuwenden; ein weiterer Anreiz für das Geringhalten der eingesetzten Leimmenge liegt darin, daß das in den Aminoplastleimen enthaltene Formaldehyd eine unerwünschte Umweltbelastung verursachen kann. Diesem Bestreben steht aber bei dem üblichen Verfahren eingangs erwähnter Art der mit einer Verminderung der eingesetzten Leimmenge eintretende Abfall der Plattenfestigkeit entgegen.

Man hat nun bisher getrachtet, durch Einsatz einer Leimflotte mit einem Festharzgehalt von ca. 50 %-Masse und durch Anwendung verschiedener apparativer Maßnahmen bei den zur Beleimung des Spanmaterials verwendeten Mischvorrichtungen den Leim möglichst gut auszunützen, d.h. eine möglichst hohe Anzahl der für die Festigkeit mit maßgeblichen Verleimungspunkte am Spanmaterial zu erzielen. Hiebei konnte man bei Verfahren eingangs erwähnter Art bei der Fertigung sogenannter « Normalplatten », das sind Platten, die beim Einsatz üblichen Spanmaterials eine Wichte von mehr als 650 kg/dm³ aufweisen und bei denen das Spanmaterial im wesentlichen allseitig beleimt ist, die in Normvorschriften festgelegten Eigenschaften mit einem Festharzanteil, der bei etwa 8 bis 9 %-Masse, gerechnet auf atro (absolut trocken) Spanmaterial liegt, erreichen.

Es ist nun ein Ziel der vorliegenden Erfindung, ein Verfahren eingangs erwähnter Art zu schaffen, mit dem eine weiter verbesserte Ausnützung des zur Beleimung des Spanmaterials eingesetzten Leimes erzielt werden kann, und dementsprechend zur Erzielung einer bestimmten Plattenfestigkeit bei einem bestimmten vorgegebenen Spanmaterial mit einer geringeren Festharzmenge als bisher das Auslangen gefunden werden kann, wobei das erfindungsgemäß zu schaffende Verfahren mit den zum Ausführen der vorgenannten bekannten Vorgangsweisen vorhandenen apparativen Einrichtungen ohne prinzipielle Änderung des Verfahrensablaufes und ohne wesentliche Veränderung der für das Verfahren erforderlichen Zeit durchführbar sein soll.

Das erfindungsgemäße Verfahren eingangs erwähnter Art ist dadurch gekennzeichnet, daß das Beleimen mit einer Flotte mit einem Festharzgehalt zwischen 20 und 35 %-Masse vorzugsweise zwischen 22 und 30 %-Masse, vorgenommen wird und hiebei eine Leimmenge eingesetzt wird, die weniger als 6 %-Masse, vorzugsweise zwischen 3 und 5 %-Masse, des gesamten atro gerechneten Spanmaterials an Festharz enthält.

Durch die erfindungsgemäße Vorgangsweise vermag der vorstehend angeführten Zielsetzung sehr gut entsprochen zu werden, und man erhält unter Einsatz einer verhältnismäßig geringen Leimharzmenge Holzspanplatten, deren mechanische Werte den Normforderungen entsprechen. Bei der erfindungsgemäßen Vorgangsweise kann auch der bei den bisher üblichen Verfahren hier in Rede stehender Art meist stark ins Gewicht fallenden nachteiligen Erscheinung, daß die im Spanmaterial vorliegenden Feinspäne schon aufgrund der bei diesen Spänen, bezogen auf ihre Masse, große Oberfläche unverhältnismäßig mehr Leim aufnehmen als die gröberen Späne, wirksam entgegengewirkt werden. Hiedurch und durch die, durch das Vorsehen der erfindungsgemäßen Maßnahmen ganz allgemein erzielbare gute Verteilung des Leimes auf der Oberfläche des Spanmaterials ergibt sich eine sehr gute Ausnützung des Leimes, sodaß mit einer verhältnismäßig geringen Leimmenge sehr gute mechanische Eigenschaften der solcherart hergestellten Platten erzielt werden können. Der ersterwähnte Umstand, daß es durch die erfindungsgemäße Vorgangsweise gelingt, die sich bei der Beleimung ergebende Leimaufnahme des Grobanteiles des Spanmaterials zulasten der Leimaufnahme des Feinanteiles des Spanmaterials zu verbessern, stellt dabei einen sehr bedeutenden Effekt, der mit der erfindungsgemäßen Vorgangsweise erzielbar ist, dar. Eine vergleichende Untersuchung ergab z.B., daß bei einer Beleimung von Spanmaterial mit einer 55 %-igen (Masse) Leimflotte, wobei 4 %-Masse Festharz berechnet auf atro Spanmaterial eingesetzt wurden, die größte Spanfraktion (Rückstand auf einem Sieb mit 2 mm Maschenweite) einen Festharzanteil von 2,0 %-Masse bezogen auf atro Span und die kleinste Spanfraktion (Durchgang durch ein Sieb mit 0,25 mm Maschenweite) einen solchen von 9,9 %-Masse Festharz bezogen auf atro Spanmaterial aufwies. Bei einer Beleimung des gleichen Spanmaterials mit einer 25 %-igen (Masse) Leimflotte, wobei wieder 4 %-Masse Festharz, berechnet auf atro Spanmaterial eingesetzt wurden, ergaben sich für die oben erwähnten Spanfraktionen Beleimungen von 2,9 bzw. 7,9 %-Masse Festharz, berechnet auf atro Spanmaterial. Es war demnach das Verhältnis der Beleimung der Fraktion der größten Späne zur Beleimung der kleinsten Späne von nahezu 1 : 5 auf etwas mehr als 1 : 2,5 zurückgegangen.

Wie erwähnt, erfolgt beim erfindungsgemäßen Verfahren das Beleimen vorzugsweise mit einer Flotte, deren Festharzgehalt zwischen 22 und 30 %-Masse liegt, da auf diese Weise sehr gut sowohl der angestrebten gleichmäßigen Beleimung der Spanmasse als auch den vom Preßprozeß her an den Feuchtigkeitsgehalt der Spanmasse gestellten Anforderungen entsprochen werden kann.

Bei der durch die erfindungsgemäße Vorgangsweise erzielten Leimverteilung ist es auch günstig, die Feuchte des beleimten Spanmaterials, welches der Verpressung unterworfen wird, unter 12 % zu halten, was durch Wahl der Konzentration der Leimflotte erzielbar ist, da die Konzentration der Leimflotte auch die im Zuge der Beleimung auf das Spanmaterial aufgebrachte Wassermenge bestimmt.

Es hat sich in der Praxis auch als günstig ergeben, die Leimflotte mit einem Verdickungsmittel zu versetzen, wodurch einem unerwünschten Eindringen des Leimes in das Spanmaterial entgegengewirkt werden kann, ohne daß dadurch eine nachteilig ins Gewicht fallende Behinderung der Leimverteilung entsteht. Als Verdickungsmittel kommen insbesondere Zellulosederivate, z.B. Methylzellulose, Äthylzellulose, Carboxymethylzellulose u. dgl., infrage, da diese Verbindungen im Hinblick auf die Härtung des Leimes reaktionsneutral sind.

Beim erfindungsgemäßen Verfahren kann auch, so wie bei dem bisher bekannten Verfahren eingangs erwähnter Art, ein Zusatz von Paraffinemulsion oder geschmolzenem Paraffin zur Hydrophobierung der Spanplatten vorgenommen werden, und es können auch im Rahmen des erfindungsgemäßen Verfahrens Mittel zur Schwerentflammbarmachung oder Pilzschutzmittel auf das Spanmaterial im Zuge der Beleimung aufgebracht werden, z.B. dadurch, daß solche Mittel der Leimflotte zugesetzt werden.

Es kann darauf hingewiesen werden, daß aus der DE-B2-21 22 817 ein Verfahren zur Herstellung von Holzspanplatten bekannt ist, bei dem abweichend vom erfindungsgemäßen Verfahren die Holzspäne mit einem auf Basis von Phenoplasten und Sulfitablauge gebildeten Bindemittel beleimt werden. Für die Phenoplastmenge im Bindemittel ist dabei ein Bereich von 1 bis 8 % und für die Menge der Sulfitablauge im Bindemittel ein Bereich von 5 bis 20 %, jeweils Feststoffgehalt bezogen auf atro Holz, angeführt.

Gemäß einem anderen Verfahren zur Herstellung von Holzspanplatten, welches in der DE-A1-24 47 590 beschrieben ist und bei dem gleichfalls abweichend vom erfindungsgemäßen Verfahren das zerkleinerte Holzausgangsmaterial mit einem auf Basis von Phenol-Formaldehyd-Harz und Lignosulfonaten gebildeten Bindemittel beleimt wird, wird getrachtet, die mit dem Bindemittel dem Holzmaterial zugeführte Wassermenge möglichst gering zu halten ; dieser Zielsetzung folgend wird das Lignosulfat in Pulverform angewendet. Im speziellen soll bei diesem bekannten Verfahren die Menge an Phenol-Formaldehyd-Harz zwischen 2 und 8 % und die Menge an Lignosulfonatpulver zwischen 2 und 10 %, jeweils bezogen auf trockene Holzsubstanz, liegen.

Es geht weiter aus der DE-A1-25 53 459 hervor, daß bei der Beleimung des zur Herstellung von Holzspanplatten vorgesehenen Spanmaterials mit Harnstoff-Formaldehyd-Harzen mit einer Flottenkonzentration von 35 bis 60 Gew.-% Harz gearbeitet wird.

Die Erfindung wird nun anhand von Beispielen weiter erläutert, ohne auf diese beschränkt zu sein.

## Beispiel 1

Es wurde der Beleimungsgrad untersucht, der sich beim Beleimen eines Holzspangemisches ergibt, das Späne verschiedener Größe enthält, wobei Leimflotten verschiedener Konzentration auf Basis eines hochverdünnbaren Harnstoff-Formaldehydleimes verwendet wurden. Das Holzspangemisch war unter Einsatz von Laub- und Nadelholz hergestellt worden und hatte eine Spangrößenverteilung entsprechend den nachstehend angeführten Fraktionsmengen einer Siebanalyse.

| <2,0 mm | 7,8 % | 0,25-0,5 mm | 22,8 % |
| 1,0-2,0 mm | 25,8 % | <0,25 mm | 9,1 % |
| 0,5-1,0 mm | 34,5 % | | |

Es wurden Leimflotten mit 55 %-Masse und 25 %-Masse Festharz verwendet. Von diesen Flotten wurden solche Mengen auf die Späne aufgebracht, daß die Beleimung für jede Flottenkonzentration 4 %-Masse Festharz, bezogen auf atro Spanmaterial, betrug. Die Beleimung wurde in einem Beleimungsmischer unter Luftbeimengung mit einer Zweistoffdüse vorgenommen. Nach der Beleimung wurden die Späne durch Siebanalyse der Größe nach fraktioniert und es wurde durch Bestimmung des Stickstoffgehaltes der Beleimungsgrad jeder Fraktion festgestellt. Die Werte sind in nachstehender Tabelle angeführt.

### Tabelle

| Spanfraktion | Stickstoffgehalt | |
| --- | --- | --- |
| | 55 %-ige Flotte | 25 %-ige Flotte |
| > 2,0 mm | 0,56 % | 0,78 % |
| 1,0 -2,0 mm | 0,65 % | 0,90 % |

Tabelle (Fortsetzung)

| Spanfraktion | Stickstoffgehalt | |
| --- | --- | --- |
| | 55 %-ige Flotte | 25 %-ige Flotte |
| 0,5 -1,0  mm | 0,98 % | 1,11  % |
| 0,25-0,5  mm | 1,54 % | 1,33  % |
| < 0,25 mm | 2,52 % | 2,063 % |

Die Werte für den Stickstoffgehalt beziehen sich jeweils auf trockenes Spanmaterial. Es ist ersichtlich, wie durch die Anwendung von hochverdünnten Leimflotten, wie dies die vorliegende Erfindung vorsieht, eine bedeutende Vergleichmäßigung der Leimverteilung auf Grob- und Feinspanfraktion erreicht wird.

### Beispiel 2

Für die Herstellung von Spanplatten wurde ein Spanmaterial verwendet, das in an sich bekannter Weise durch Zerkleinern von 20 % Stammholz, 25 % Hackschnitzel und aus 55 % Sägewerksabfällen (vorwiegend Sägespäne) hergestellt worden war und hinsichtlich der Holzarten aus 65 % Nadelholz und 35 % Buche und anderen Laubhölzern bestand. Das so hergestellte Spangemisch wurde über entsprechende Sichtungseinrichtungen in einen Grobanteil für die Mittelschicht und einen Feinanteil für die Deckschicht getrennt. Der Feinanteil wies vor der Beleimung einen Feuchtigkeitsgehalt von 3,5 %, der Grobanteil einen solchen von 1 % auf. Die so vorbereiteten Späne wurden nun mit einer Leimflotte, welche einen Festharzgehalt von 35 %-Masse aufwies und die darüberhinaus noch die erforderlichen Mengen an Härter- und Puffersubstanzen sowie eine Paraffinemulsion enthielt, beleimt, wobei die Leimmenge so gewählt wurde, daß sich bei dem für die Deckschicht vorgesehenen Spanmaterial ein Beleimungsgrad von 6,5 %-Masse Festharz und bei dem für die Mittelschicht vorgesehenen Spanmaterial ein Beleimungsgrad von 5,5 %-Masse Festharz, beides berechnet auf atro Spanmaterial, ergab. Die Feuchte der beleimten Späne lag beim Feingut bei 13,1 % und beim Grobgut bei 10 %. Das beleimte Spanmaterial wurde zu einem dreilagigen Vlies gestreut und in einer Mehretagenpresse unter Einwirkung von Druck und Hitze mit einer Preßzeit von 14 sek/mm Rohdicke zu einer Spanplatte mit 19 mm Dicke und einer Wichte von 685 kg/m³ gepreßt. Die so vorwiegend aus Abfallholz hergestellte Spanplatte entsprach den Anforderungen der DIN 68763.

### Beispiel 3

Spanmaterial, wie es üblicherweise zur Herstellung von Spanplatten verwendet wird und das auf eine Feuchte von 1,5 % getrocknet worden war, wurde in einem Beleimungsmischer mit einer Leimflotte, die 29 %-Masse Festharz neben den üblichen Mengen an Härter- und Puffersubstanzen sowie eine Paraffinemulsion in einer Menge enthielt, die schließlich einem Zusatz von 0,8 %-Masse Festparaffin, berechnet auf atro Spanmaterial entsprach, beleimt. Die Zufuhr von Spanmaterial und Leimflotte war so abgestimmt, daß sich ein Beleimungsgrad von 4,8 %-Masse Festharz, bezogen auf atro Spanmaterial, einstellte. Das beleimte Spanmaterial wurde zu einem Vlies gestreut und wies nach der Streustation einen Feuchtegehalt von 10,8 % auf. Es wurde nun in einer Einetagenpresse zu einer Spanplatte gepreßt, wobei bei einer Heizplattentemperatur von 200 °C und einem maximalen Preßdruck von 30 bar 3,15 min gepreßt wurde. Es wurde eine Spanplatte mit einer Rohstärke von 23,5 mm und einer Wichte von 670 kg/m³ erhalten. Die Festigkeitswerte dieser Platte entsprachen voll den Anforderungen von DIN 68763.

### Beispiel 4

Spanmaterial, das durch herkömmliche Aufbereitung in Zerspanern aus Stammholz hergestellt worden war, zu 90 % aus Nadelholz und zu 10 % aus leichtem Laubholz bestand und einen nur geringen Anteil an Feinstteilen enthielt, wurde in einem Drehdüsentrockner auf eine Feuchte von weniger als 1 % getrocknet. Dieses Spanmaterial wurde zunächst mit geschmolzenem Paraffin in einer Menge von 0,8 %-Masse, bezogen auf atro Spanmaterial, versehen und schließlich mit einer Leimflotte beleimt, die einen Gehalt von 22 %-Masse Festharz hatte. Die Leimflotte enthielt daneben noch 2 %-Masse Ammonchlorid, berechnet auf Festharz. Es wurde eine Beleimung von 3,5 %-Masse, berechnet auf atro Spanmaterial, eingestellt. Die Feuchte der beleimten Späne, gemessen nach dem Streuwagen, betrug 11,5 %. Mit diesem Spanmaterial wurde eine Spanplatte mit einer Dicke von 18 mm und einer Wichte von 700 kg/m³ in einer Einetagenpresse hergestellt. Die Eigenschaften der Platte entsprachen DIN 68763.

## Beispiel 5

Ein Rohmaterial, das zu etwa 50 % aus Stammholz und 50 % aus Abfallholz (Sägespäne, Hackschnitzel, Spreißel) bestand, wurde zerspant, auf eine Feuchte von etwa 1 % getrocknet und das Spanmaterial in einen Feinanteil und einen Grobanteil aufgeteilt. Der Feinanteil und der Grobanteil wurden getrennt voneinander mit wässerigen Flotten eines handelsüblichen Harnstoff-Formaldehyd-Leimes beleimt. Hiebei wurde zur Beleimung des Feinanteiles eine Flotte mit einem Gehalt von 24,9 %-Masse Festharz eingesetzt, welche außerdem noch 0,1 %-Masse Ammonchlorid (bezogen auf Festharz), eine Paraffinemulsion als Hydrophobierungsmittel und als Verdickungsmittel 2 %-Masse einer Hydroxyäthylzellulose (bezogen auf Festharz) enthielt. Durch den Zusatz des Verdickungsmittels ergab sich für die hochverdünnte Leimflotte eine Viskosität von 105 mPa.s. Die Menge der Leimflotte wurde so gewählt, daß sich eine Beleimung von 4,2 %-Masse Festharz, berechnet auf atro Feinanteil des Spanmaterials, ergab. Es stellte sich eine Feuchte der beleimten Späne von 14 % ein. Zur Beleimung des Grobanteiles des Spanmaterials wurde eine 33,1 %-Masse Festharz enthaltende Leimflotte mit Zusatz von 1,6 %-Masse Ammonchlorid (berechnet auf Festharz), einer Paraffinemulsion und 1 %-Masse (bezogen auf Festharz) des obigen Verdickungsmittels verwendet. Die Viskosität der hochverdünnten Leimflotte betrug durch den Zusatz des Verdickungsmittels 100 mPa.s. Die Menge dieser Flotte wurde so gewählt, daß sich eine Beleimung von 4,2 %-Masse Festharz, berechnet auf atro Grobspan ergab. Die Feuchte der beleimten Späne betrug 8 %. Die beiden beleimten Spanfraktionen wurden dann in getrennten Streueinrichtungen zu einem dreischichtigen Spänevlies gestreut, wobei die Feinspanfraktion die Deckschichten und die Grobspanfraktion die Mittelschichte ausbildete. Das Spänevlies wurde in einer Heizpresse unter Einwirkung von Druck und Hitze mit 15 s/mm Rohdicke zu einer 19 mm-Spanplatte mit einer Wichte von 680 kg/m³ gepreßt. Die Festigkeitswerte dieser Platte entsprachen sehr gut den Anforderungen nach DIN 68763.

Eine Vergleichsplatte, die unter sonst gleichen Bedingungen hergestellt wird, bei der aber die zur Beleimung verwendeten Leimflotten kein Verdickungsmittel enthielten, entsprach ebenfalls den Anforderungen nach DIN 68763, die Festigkeitswerte lagen aber um etwa 15 % niedriger.

### Ansprüche

1. Verfahren zur Herstellung von Holzspanplatten, bei dem das Rohmaterial einer Zerspanung und einer darauffolgenden Trocknung auf eine Feuchte von weniger als 4 %, vorzugsweise weniger als 2 %, unterworfen, hierauf mit einer wässerigen Flotte eines Aminoplasts beleimt und danach das so erhaltene beleimte Spanmaterial unter Druck und Hitze zu Platten verpreßt wird, dadurch gekennzeichnet, daß das Beleimen mit einer Flotte mit einem Festharzgehalt zwischen 20 und 35 %-Masse, vorzugsweise zwischen 22 und 30 %-Masse, vorgenommen wird und hiebei eine Leimmenge eingesetzt wird, die weniger als 6 %-Masse, vorzugsweise zwischen 3 und 5 %-Masse, des gesamten atro gerechneten Spanmaterials an Festharz enthält.

2. Verfahren nach Anspruch 1, dadurch gekennzeichnet, daß in an sich bekannter Weise durch Wahl der mit der Leimflotte auf das Spanmaterial aufgebrachten Wassermenge die Feuchtigkeit des beleimten Spanmaterials unter 12 % gehalten wird.

3. Verfahren nach Anspruch 1 oder 2, dadurch gekennzeichnet, daß die Leimflotte mit einem Verdickungsmittel, wie einem Zellulosederivat, z.B. Methylzellulose, Äthylzellulose oder Carboxymethylzellulose versetzt wird.

### Claims

1. A process for preparing wood chip boards in which the raw material is subjected to a cutting operation and to a subsequent drying step so as to achieve a moisture content of less than 4 %, preferably less than 2 %, whereafter the material is glued with an aqueous liquor of an aminoplast and then the glued chip material thus obtained is compressed under pressure and heat to give boards, characterized in that the glueing step is conducted with a liquor having a content of solid resin between 20 and 35 % by weight, preferably between 22 and 30 % by weight, using an amount of glue containing less than 6 % by weight, preferably between 3 and 5 % by weight, of solid resin of the whole chip material calculated as absolutely dry material.

2. The process of claim 1, characterized in that the moisture content of the glued chip material is kept below 12 % in a manner known per se by selecting the amount of water applied onto the chip material together with the glue liquor.

3. The process of claim 1 or 2, characterized in that a thickening agent, such as a cellulose derivative, e.g. methyl cellulose, ethyl cellulose or carboxy methyl cellulose is added to the glue liquor.

### Revendications

1. Procédé de fabrication de panneaux de particules dans lequel la matière première est soumise à une transformation en copeaux puis à un séchage à une humidité inférieure à 4 %, de préférence inférieure à 2 %, après quoi elle est encollée avec un bain aqueux d'un aminoplaste et les copeaux encollés ainsi obtenus sont ensuite pressés en panneaux sous pression et à chaud, caractérisé en ce que l'encollage est effectué avec un bain ayant une teneur en résine solide comprise entre 20 et 35 % en poids, de préférence entre 22 et 30 % en poids, et en ce qu'on utilise à cet effet une quantité de colle contenant moins de 6 % en poids, de préférence entre 3 et 5 % en poids de résine par rapport au poids total absolument sec des copeaux.

2. Procédé suivant la revendication 1, caractérisé en ce que l'humidité des copeaux encollés est maintenue au-dessous de 12 % d'une manière connue en soi en choisissant la quantité d'eau appliquée sur les copeaux avec le bain de colle.

3. Procédé suivant la revendication 1 ou 2, caractérisé en ce que le bain de colle est additionné d'un abent épaississant, tel qu'un dérivé de la cellulose, comme la méthylcellulose, l'éthylcellulose ou la carboxyméthylcellulose.